# FASCICULE DE BREVET EUROPEEN

(11) **EP 3 804 253 B1**
(45) Date de publication et mention de la délivrance du brevet: **20.08.2025**
(21) Numéro de dépôt: 19740628.3
(22) Date de dépôt: 29.05.2019
(51) Int. Cl.: H04L 65/10

(54) **PROCÉDÉ DE MISE À JOUR D'UNE BASE DE DONNÉES D'UN RÉSEAU DE VOIX SUR IP**
VERFAHREN ZUR AKTUALISIERUNG EINER DATENBANK EINES VOICE-OVER-IP-NETZWERKS
METHOD FOR UPDATING A DATABASE OF A VOICE OVER IP NETWORK

(30) Priorité: 06.06.2018 FR 1854916
(43) Date de publication de la demande: 14.04.2021
(73) Titulaire: Orange, 92130 Issy-les-Moulineaux (FR)
(72) Inventeur: FOUQUET, Stéphane, 92326 CHÂTILLON CEDEX (FR); PASCUAL, Juan, 92326 CHÂTILLON CEDEX (FR); LABRANCHE, Miguel, 92326 CHÂTILLON CEDEX (FR)
(74) Mandataire: Cabinet Beau de Loménie
(86) Numéro de dépôt international: PCT/FR2019/051262
(87) Numéro de publication internationale: WO 2019/234325

(56) Documents cités:
- WO-A2-2007/010160
- US-A1- 2007 127 447
- US-A1- 2008 084 870

## Description

L'invention se rapporte au domaine général des télécommunications.

Elle concerne plus particulièrement un procédé de couplage, au niveau d'un réseau de téléphonie, d'un identifiant matériel d'un terminal d'un utilisateur avec une identité téléphonique allouée à l'utilisateur par le réseau de téléphonie.

L'invention a ainsi une application privilégiée mais non limitative dans le contexte de la téléphonie fixe, et notamment de la téléphonie fixe s'appuyant sur la technologie de voix sur IP (ou VoIP pour Voice over IP).

Dans l'état actuel de la technique, en téléphonie fixe (par opposition à la téléphonie mobile), l'opérateur de téléphonie alloue à chaque utilisateur une identité téléphonique publique destinée à être sur le réseau de téléphonie, puis cette identité téléphonique publique est associée (i.e. couplée) à un terminal dédié de l'utilisateur (par exemple à un téléphone particulier). Ceci permet à l'opérateur de téléphonie, lorsqu'un terminal émet un appel sur son réseau en utilisant une identité téléphonique publique, de vérifier que ce terminal est bien associé à cette identité téléphonique et est bien autorisé à l'utiliser. Tant qu'un terminal n'est pas couplé dans le système d'informations de l'opérateur de téléphonie à une identité téléphonique publique allouée par l'opérateur à un utilisateur, le terminal n'est pas en mesure d'émettre le moindre appel sur le réseau de téléphonie de l'opérateur en utilisant cette identité. Pour l'utilisateur du terminal, cette situation peut s'avérer quelque peu déstabilisante : aucune tonalité n'est émise dans son téléphone quand il le décroche pour émettre un appel, tout au plus, est-il invité à enregistrer son terminal avant toute utilisation préalable sur le réseau de téléphonie.

Pour coupler un terminal à une identité téléphonique publique, le réseau de téléphonie s'appuie sur un identifiant du terminal permettant de l'identifier de manière univoque. Cet identifiant est typiquement un identifiant matériel du terminal, tel que par exemple une adresse MAC (Medium Access Control) permettant de l'identifier de manière unique. L'accès à cette information par l'opérateur du réseau de téléphonie requiert en général aujourd'hui l'intervention d'un administrateur, et peut s'avérer long et fastidieux à mettre en œuvre. L'effort à fournir est d'autant plus important dans le contexte actuel de la téléphonie VoIP dans lequel on n'est plus en présence d'une liaison point-à-point comme par le passé pour les réseaux RNIS entre la passerelle d'accès au réseau de téléphonie (couramment désignée par « box ») et un terminal, mais où différents terminaux peuvent être utilisés et partager une même identité téléphonique publique. Dans ce contexte, l'administrateur doit intervenir à chaque fois que l'on souhaite attribuer l'identité téléphonique d'un utilisateur à un autre terminal.

Par conséquent, il existe un besoin d'un procédé permettant à un opérateur d'un réseau de téléphonie de voix sur IP de réaliser facilement le couplage des identités téléphoniques qu'il alloue sur son réseau aux identifiants matériels des terminaux susceptibles d'utiliser ces identités pour accéder au réseau.

Le document US 2007 /127 44 7 A1 décrit un procédé d'enregistrement d'un terminal auprès d'un un serveur d'appel SIP, dans lequel une adresse MAC du terminal SIP est stockée en correspondance avec le terminal. Le document US 2008/084870A1 montre comment permettre à un utilisateur via un dispositif VoIP d'authentifier et d'associer ledit dispositif VoIP à un compte d'abonné particulier

### Objet et résumé de l'invention

L'invention répond notamment à ce besoin en proposant un procédé de mise à jour d'une base de données d'un réseau de voix sur IP par une passerelle d'un réseau local permettant un accès au réseau de voix sur IP, le procédé comprenant :
- une étape de réception d'un message d'initiation d'un appel de voix sur IP sur le réseau de voix sur IP en provenance d'un terminal connecté au réseau local ;
- une étape de détermination d'un identifiant matériel du terminal à partir d'une adresse IP utilisée par le terminal sur le réseau local et contenue dans le message d'initiation d'appel, cet identifiant matériel identifiant de manière unique le terminal ;
- si l'identifiant matériel est couplé dans la base de données du réseau de voix sur IP à une identité téléphonique allouée par le réseau de voix sur IP, une étape de transfert du message d'initiation d'appel vers le réseau de voix sur IP pour établissement de l'appel sur le réseau de voix sur IP avec un destinataire du message d'initiation d'appel ;
- sinon :
   ∘ une étape d'établissement d'un canal de voix sur IP entre le terminal et un serveur vocal hébergé par la passerelle d'accès ;
   ∘ une étape d'obtention par le serveur vocal, via le canal établi, d'un code d'authentification d'un utilisateur du terminal ;
   ∘ si le code d'authentification obtenu est associé au niveau du réseau de voix sur IP à une identité téléphonique allouée par le réseau de voix sur IP, une étape de mise à jour de la base de données en couplant dans la base de données l'identifiant matériel du terminal à cette identité téléphonique.

Corrélativement, l'invention concerne également une passerelle d'accès à un réseau de voix sur IP, connectée à un réseau local et comprenant :
- un module de réception, apte à recevoir un message d'initiation d'un appel de voix sur IP sur le réseau de voix sur IP en provenance d'un terminal connecté au réseau local ;
- un module de détermination, configuré pour déterminer un identifiant matériel du terminal à partir d'une adresse IP utilisée par le terminal sur le réseau local et contenue dans le message d'initiation d'appel ;
- un module de transfert, activé si l'identifiant matériel est couplé dans une base de données du réseau de voix sur IP à une identité téléphonique allouée par le réseau de voix sur IP, et configuré pour transférer le message d'initiation d'appel vers le réseau de voix sur IP pour établissement de l'appel sur le réseau de voix sur IP avec un destinataire du message d'initiation d'appel ;
- des modules activés sinon comprenant :
   ∘ un module d'établissement, configuré pour établir l'appel de voix sur IP entre le terminal et un serveur vocal hébergé par la passerelle d'accès ;
   ∘ un module d'obtention, configuré pour obtenir via le serveur vocal et le canal établi un code d'authentification d'un utilisateur du terminal ;
   ∘ un module de mise à jour, activé si le code d'authentification obtenu est associé au niveau du réseau de voix sur IP à une identité téléphonique allouée par le réseau de voix sur IP, et configuré pour mettre à jour la base de données en couplant dans la base de données l'identifiant matériel du terminal à cette identité téléphonique.

L'invention offre ainsi un procédé simple et automatisé pour collecter les identifiants matériels des terminaux des utilisateurs d'un réseau de téléphonie de voix sur IP et les coupler avec les identités téléphoniques allouées à ces utilisateurs par le réseau. Les identifiants matériels collectés sont par exemple les adresses MAC (Medium Access Control) des terminaux, qui les identifient de manière unique. Ces identifiants matériels sont avantageusement collectés conformément à l'invention par les passerelles d'accès au réseau de voix sur IP (aussi désignées couramment par « box ») auxquelles sont connectés les terminaux. Ces passerelles peuvent être par exemple fournies aux utilisateurs des terminaux par l'opérateur du réseau de téléphonie de voix sur IP. Ce cas particulier facilite les échanges entre les passerelles et le réseau de téléphonie puisqu'ils sont gérés par le même opérateur. Cette hypothèse n'est toutefois pas limitative de l'invention. Il convient de noter par ailleurs que ce sont ces passerelles qui allouent aux terminaux leurs adresses IP pour communiquer sur leurs réseaux locaux, et qui, si elles ne maintiennent pas déjà une table de correspondance entre ces adresses IP et des identifiants matériels des terminaux auxquels elles sont connectées, sont en mesure d'obtenir facilement de tels identifiants matériels, comme détaillé davantage ultérieurement.

Le procédé proposé par l'invention permet avantageusement de s'affranchir de l'intervention d'un administrateur et facilite donc la mise à jour du système d'informations de l'opérateur du réseau de téléphonie en cas de changement de terminal par un utilisateur. L'invention est par conséquent particulièrement bien adaptée dans le contexte de la téléphonie sur IP dans lequel l'utilisation de multiples terminaux associée à une même identité téléphonique publique est rendue possible et courante. Elle a en outre un intérêt privilégié dans les environnements dynamiques où les terminaux sont amenés à être remplacés souvent ou de nouveaux terminaux sont susceptibles d'être ajoutés (ex. extension du parc de terminaux d'une entreprise, etc.).

Par ailleurs, le procédé proposé par l'invention pour provisionner le système d'informations du réseau de téléphonie est très simple à mettre en œuvre et sécurisé : il requiert uniquement du côté du réseau de téléphonie la fourniture (et le stockage) d'un code d'authentification de l'utilisateur en association avec l'identité téléphonique que lui alloue le réseau de téléphonie, code d'authentification que l'utilisateur est invité à fournir à un serveur vocal lors du premier accès au réseau de téléphonie avec son terminal pour permettre le cas échéant le couplage de son terminal avec son identité téléphonique. Le procédé selon l'invention ne demande donc aucune modification du terminal à proprement parler (il peut être utilisé avec n'importe quel terminal apte à initier un appel sur un réseau de voix sur IP), et améliore l'expérience de l'utilisateur qui est redirigé lors de ce premier accès vers un serveur vocal. En d'autres mots, contrairement à l'état de la technique, l'utilisateur peut initier un appel depuis son terminal même si celui-ci n'est pas encore couplé à l'identité téléphonique allouée à l'utilisateur (i.e. il ne se heurte pas à une absence de tonalité dans son terminal lorsqu'il veut émettre un tel appel), mais au lieu de transmettre cet appel vers le réseau de voix sur IP pour qu'il soit établi avec son destinataire, cet appel est redirigé automatiquement par la passerelle vers un serveur vocal qui invite l'utilisateur à fournir un code d'authentification pour réaliser le couplage.

Le code d'authentification fourni par l'utilisateur permet à la passerelle selon l'invention de s'assurer que l'identifiant matériel qu'elle est elle-même en mesure de récupérer à partir de l'adresse IP incluse dans le message d'initiation d'appel émis par le terminal, et donc que le terminal lui-même identifié de manière unique par cet identifiant matériel, correspond bien à un utilisateur autorisé à accéder au réseau de téléphonie, et que les informations qu'elle provisionne dans le système d'informations du réseau de téléphonie sont correctes.

En outre, de façon avantageuse, le code d'authentification n'est requis auprès de l'utilisateur qu'une unique fois pour chacun de ses terminaux, i.e. uniquement la première fois qu'il tente d'utiliser le réseau de voix sur IP avec ces terminaux pour initier des appels de voix sur IP. Pour les appels suivants, la passerelle est avantageusement configurée pour détecter que le couplage est déjà réalisé auprès du réseau de téléphonie et transférer directement le message d'initiation d'appel vers le réseau de téléphonie pour établissement de l'appel avec son destinataire.

L'invention peut donc s'appliquer dans de nombreux contextes, domestiques ou professionnels : le terminal au sens de l'invention peut être n'importe quel dispositif mettant en œuvre une technologie de voix sur IP tel qu'un téléphone matériel ou logiciel (ou « softphone » en anglais), mais également un autocommutateur privé de type PABX IP (ou IPBX pour « IP Private Branch eXchange » en anglais) auxquels sont rattachés une pluralité de terminaux de voix sur IP et permettant par exemple à une entreprise de gérer ses appels téléphoniques en interne ou vers l'extérieur en utilisant le protocole IP. Un utilisateur au sens de l'invention peut donc être un particulier ou un groupe d'utilisateurs tel une entreprise auquel l'opérateur du réseau de téléphonie a alloué une identité téléphonique pour communiquer sur son réseau.

Dans un mode particulier de réalisation, le procédé selon l'invention comprend, avant l'étape de mise à jour de la base de données, si le code d'authentification fourni est associé au niveau du réseau de voix sur IP à une identité téléphonique allouée par le réseau de voix sur IP, une étape de réception de cette identité téléphonique en provenance du réseau de voix sur IP.

Ce mode de réalisation permet d'améliorer la sécurité du procédé de mise à jour selon l'invention, l'identité téléphonique étant transmise directement à la passerelle par le réseau de voix sur IP l'ayant allouée à l'utilisateur et correspondant au code d'authentification fourni par l'utilisateur.

Dans un autre mode de réalisation, l'identité téléphonique allouée par le réseau de voix sur IP et utilisée lors de l'étape de mise à jour est fournie au serveur vocal par l'utilisateur lors de l'étape d'obtention du code d'authentification.

Dans ce cas, un double contrôle peut être réalisé au niveau du réseau de voix sur IP avant de mettre à jour la base de données : un premier contrôle peut consister à s'assurer que le code d'authentification fourni correspond bien à une identité téléphonique allouée à un utilisateur par le réseau de voix sur IP, tandis qu'un deuxième contrôle peut consister à vérifier que l'identité téléphonique qui est fournie en association avec le code d'authentification est bien cohérente avec l'identité téléphonique associée à ce code au niveau du réseau de téléphonie.

Dans un mode particulier de réalisation, le procédé comprend, suite à l'étape de mise à jour, une étape de transfert du message d'initiation vers le réseau de voix sur IP pour établissement de l'appel avec un destinataire du message d'initiation d'appel.

Ce mode de réalisation permet de faciliter l'expérience de l'utilisateur qui n'a pas besoin de réémettre d'appel suite au couplage de son terminal.

En variante, le procédé comprend, suite à l'étape de mise à jour, une étape d'invitation de l'utilisateur par le serveur vocal à réémettre son message d'initiation d'appel sur le réseau de voix sur IP. Conformément à l'invention, comme le terminal est maintenant couplé à l'identité téléphonique de l'utilisateur au niveau du réseau de voix sur IP, le nouveau message d'initiation d'appel émis est transféré directement par la passerelle au réseau de voix sur IP pour établissement de l'appel avec le destinataire du message d'initiation d'appel.

Comme mentionné à plusieurs reprises, l'invention s'applique dans le contexte d'un réseau de téléphonie de voix sur IP.

Dans un mode privilégié de réalisation, ce réseau de téléphonie de voix sur IP met en œuvre le protocole d'initiation de session SIP (Session Initiation Protocol), et le message d'initiation d'appel émis par le terminal est conforme au protocole SIP (il s'agit notamment d'un message SIP INVITE bien connu en soi). Le protocole SIP est un protocole couramment utilisé dans les réseaux de voix sur IP, ce qui facilite l'implémentation de l'invention dans différents réseaux.

Bien entendu, d'autres protocoles peuvent être utilisés en variante, comme par exemple des protocoles propriétaires.

Dans un mode particulier de réalisation, le serveur vocal comprend un module de synthèse vocale, et/ou un module de reconnaissance vocale et/ou un agent conversationnel.

De tels modules permettent au serveur vocal de récupérer facilement le code d'authentification pour réaliser le couplage du terminal. Ce mode de réalisation améliore par ailleurs l'expérience utilisateur qui peut interagir de façon conviviale avec le serveur vocal.

Dans un autre mode de réalisation, le procédé comprend :
- une étape de réception d'une commande de découplage en provenance du terminal ; et
- une étape de suppression de l'identifiant matériel du terminal dans la base de données.

Ceci permet de gérer la situation dans laquelle un utilisateur change de terminal par exemple, et ne prévoit plus typiquement d'utiliser le terminal qui est appairé à son identité publique.

Dans un mode particulier de réalisation, les différentes étapes du procédé de mise à jour sont déterminées par des instructions de programmes d'ordinateurs.

En conséquence, l'invention vise aussi un programme d'ordinateur sur un support d'informations, ce programme étant susceptible d'être mis en œuvre dans une passerelle ou plus généralement dans un ordinateur, ce programme comportant des instructions adaptées à la mise en œuvre des étapes d'un procédé de mise à jour tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect l'invention vise également un système de communication comprenant :
- au moins un terminal d'un utilisateur connecté à un réseau local ;
- une base de données d'un réseau de voix sur IP ; et
- une passerelle d'accès au réseau de voix sur IP conforme à l'invention et connectée au réseau local, cette passerelle d'accès étant apte à mettre à jour la base de données du réseau de voix sur IP avec une identité téléphonique allouée par le réseau de voix sur IP à l'utilisateur du terminal couplée à un identifiant matériel du terminal de l'utilisateur.

On peut également envisager, dans d'autres modes de réalisation, que le procédé de mise à jour, la passerelle et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communication conforme à l'invention dans un mode particulier de réalisation ;
- la figure 2 illustre un exemple d'architecture matérielle d'une passerelle d'accès du système de communication de la figure 1, conforme à l'invention ; et
- la figure 3 représente, sous la forme d'un diagramme de flux, les principales étapes d'un procédé de mise à jour tel qu'il est mis en œuvre dans un mode particulier de réalisation par la passerelle de la figure 2.

### Description détaillée de l'invention

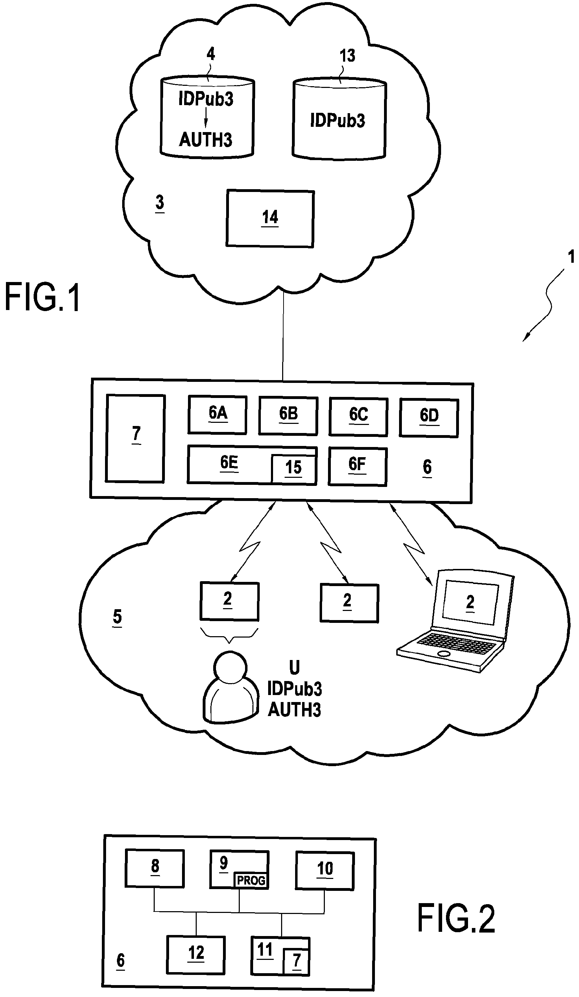

La **figure 1** représente, dans son environnement, un système de communication 1 conforme à l'invention, dans un mode particulier de réalisation.

Dans l'exemple illustré à la figure 1, le système de communication 1 permet de simplifier la collecte de l'identifiant matériel d'un terminal 2 d'un utilisateur U par un réseau de téléphonie de voix sur IP 3 auprès duquel l'utilisateur U a souscrit un abonnement. On s'intéresse ici à un réseau de téléphonie fixe mettant en œuvre la technologie de voix sur IP s'appuyant sur le protocole SIP (Session Initiation Protocol). Cette dernière hypothèse n'est toutefois pas limitative en soi, et l'invention peut s'appliquer à d'autres protocoles adaptés à la voix sur IP, comme par exemple à des protocoles propriétaires.

Lors de la souscription par l'utilisateur de son abonnement auprès de l'opérateur du réseau 3, une identité téléphonique publique IDPub3 est fournie par l'opérateur du réseau 3 à l'utilisateur U. Cette identité téléphonique identifie l'utilisateur U sur le réseau de téléphonie de voix sur IP 3 et lui permet de communiquer via ce réseau avec d'autres utilisateurs. Il s'agit par exemple d'un numéro de téléphone, d'une adresse de type SIP URI (Uniform Resource Identifier), d'une adresse de type URL (Uniform Resource Locator), etc.

Conformément à l'invention, l'opérateur du réseau 3 fournit également à l'utilisateur U, par exemple lors de la souscription de l'abonnement précité, un code d'authentification AUTH3 associé dans une base de données 4 du réseau 3 à l'identité téléphonique publique IDPub3. Aucune limitation n'est attachée à la forme que prend ce code d'authentification, ni comment il est généré ou échangé entre le réseau 3 et l'utilisateur U (préférentiellement toutefois de manière sécurisée) : il peut s'agir par exemple d'une chaîne de caractères alphanumériques ou uniquement de caractères numériques, d'un couple login/mot de passe convenu avec l'utilisateur U, etc. ; ce code peut être fourni par courrier, par message électronique, par SMS (Short Message Service) ou par tout autre moyen à l'utilisateur U.

Dans l'exemple envisagé à la figure 1, on considère un contexte résidentiel, dans lequel un ou plusieurs utilisateurs U dispose(nt) d'un ou de plusieurs terminaux 2, connectés à un réseau local 5 géré par une passerelle résidentielle ou box 6, conforme à l'invention. Par souci de simplification, on suppose ici que chacun des terminaux 2 est capable de mettre en œuvre une technique de communication de voix sur IP (VoIP). Toutefois, cette hypothèse n'est en aucun cas limitative. Par ailleurs, aucune limitation n'est attachée à la nature des terminaux 2 : il peut s'agir de téléphones, matériels ou logiciels, d'ordinateurs équipés de logiciels de voix sur IP, etc. On suppose ici que les terminaux 2 sont équipés de moyens d'entrée/sortie leur permettant d'interagir avec l'utilisateur U comme par exemple un clavier, un microphone et un haut-parleur, etc.

La passerelle 6 permet aux terminaux 2 d'accéder à des réseaux externes au réseau local 5, comme par exemple au réseau public Internet ou encore au réseau 3 de téléphonie fixe de voix sur IP. En d'autres mots, pour émettre un appel sur le réseau 3 ou recevoir un appel via ce réseau 3, les terminaux 2 passent par la passerelle 6.

Les fonctionnalités d'une telle passerelle sont connues en soi et ne sont pas décrites en détail ici. C'est par exemple la passerelle 6 qui attribue à chacun des terminaux 2 une adresse IP distincte pour communiquer sur le réseau local 5. A chaque attribution d'une adresse IP, notée @IP2, à un terminal 2, la passerelle 6 obtient de ce terminal un identifiant matériel l'identifiant de manière unique, à savoir ici son adresse MAC, notée @MAC2. A cet effet, la passerelle 6 peut émettre une requête conforme par exemple au protocole ARP (Address Resolution Protocol) sur le réseau local 5 utilisant comme paramètre l'adresse IP @IP2 allouée au terminal 2. Une telle requête est connue de l'homme du métier. Une fois l'adresse MAC du terminal 2 obtenue, celle-ci est stockée par la passerelle 6 dans une table dite « ARP » 7 en correspondance avec l'adresse IP @IP2 allouée au terminal 2. Cette table ARP 7 est maintenue à jour par la passerelle 6, à chaque fois qu'une nouvelle adresse IP est attribuée à un terminal dans le réseau local 5.

Dans le mode de réalisation décrit ici, la passerelle 6 a l'architecture matérielle d'un ordinateur, telle que représentée à la **figure 2****.** Elle comprend notamment un processeur 8, une mémoire morte 9, une mémoire vive 10, une mémoire non volatile 11 (dans laquelle est stockée notamment ici la table ARP 7), et des moyens de communication 12. Ces moyens de communication 12 permettent à la passerelle 6 de communiquer avec les terminaux 2 du réseau local 5 (via une connectivité filaire ou sans fil), mais également avec des équipements appartenant à des réseaux distants, comme par exemple avec le réseau de téléphonie de voix sur IP 3. Ils incluent notamment ici une carte réseau et une pile de protocole VoIP adaptée à la mise en œuvre d'une technique de communication de voix sur IP selon le protocole SIP.

La mémoire morte 9 de la passerelle 6 constitue un support d'enregistrement conforme à l'invention, lisible par le processeur et sur lequel est enregistré un programme d'ordinateur PROG conforme à l'invention, comportant des instructions pour l'exécution d'un procédé de mise à jour selon l'invention. Ce procédé est destiné, conformément à l'invention, à mettre à jour (i.e. à provisionner) une base de données 13 du réseau 3 de voix sur IP dans laquelle est stockée, en association avec chaque identité téléphonique publique allouée par le réseau 3 à un utilisateur, un identifiant matériel d'un terminal que l'utilisateur en question utilise pour passer ses appels sur le réseau 3. Les identifiants matériels qui sont couplés dans la base de données 13 aux identités téléphoniques publiques allouées par le réseau 3 identifient de manière unique les terminaux auxquels ils se rapportent. Dans le mode de réalisation décrit ici, ces identifiants matériels sont des adresses MAC, comme discuté précédemment. Par ailleurs, on suppose ici que lorsque l'opérateur du réseau 3 alloue une identité téléphonique publique à un utilisateur, il renseigne la base de données 13 avec cette identité téléphonique. Par conséquent, lorsque l'utilisateur U a souscrit son abonnement auprès de l'opérateur du réseau 3, celui-ci a ajouté dans la base de données 13 l'identité téléphonique IDPub3 qu'il a allouée à l'utilisateur U. Toutefois, à ce stade, aucun identifiant matériel n'est couplé à cette identité téléphonique.

Le programme PROG définit divers modules fonctionnels et logiciels de la passerelle 6, aptes à mettre en œuvre les étapes du procédé de mise à jour selon l'invention de la base de données 13 et s'appuyant sur les éléments matériels 8-12 de la passerelle 6. Ces modules comprennent notamment ici :
- un module 6A de réception, apte à recevoir un message d'initiation d'un appel de voix sur IP sur le réseau 3 de voix sur IP en provenance d'un terminal 2 d'un utilisateur U connecté au réseau local 5. Un tel message est, dans l'exemple envisagé ici d'un réseau de téléphonie de voix sur IP implémentant le protocole SIP, un message SIP INVITE comprenant dans le champ TO de son entête le destinataire de l'appel de voix sur IP ;
- un module 6B de détermination, configuré pour déterminer un identifiant matériel du terminal 2 (dans l'exemple envisagé ici son adresse MAC @MAC2) à l'origine du message SIP INVITE reçu par le module 6A de réception à partir de l'adresse IP utilisée par le terminal 2 sur le réseau local 5 et contenue dans le message SIP INVITE ;
- un module 6C de transfert, activé si l'identifiant matériel (@MAC2 ici) déterminé par le module 6B de détermination est couplé dans la base de données 13 du réseau 3 de voix sur IP à une identité téléphonique allouée par le réseau 3 à un utilisateur, et configuré pour transférer le message d'initiation SIP INVITE reçu par le module 6A de réception vers le réseau 3 pour établissement de l'appel avec le destinataire de cet appel (par exemple vers une plateforme 14 de voix sur IP du réseau 3 apte à gérer cet appel en vue de son établissement) ;
- des modules 6D-6F, activés sinon, et comprenant :
   o un module 6D d'établissement, configuré pour établir un canal de voix sur IP entre le terminal 2 et un serveur vocal interactif 15 hébergé par la passerelle 6. Dans le mode de réalisation décrit ici, le serveur vocal interactif 15 comprend un module de reconnaissance vocale (non représenté) connu en soi, lui permettant d'interagir avec l'utilisateur U. En variante, le serveur vocal interactif 15 peut comprendre un module de synthèse vocale et/ou un agent conversationnel, également connus en soi et non décrits dans le détail ici ;
   ∘ un module 6E d'obtention, configuré pour obtenir de l'utilisateur U du terminal 2 via le serveur vocal 15, et plus particulièrement le canal de voix sur IP établi entre le terminal et le serveur vocal interactif 15, un code d'authentification de cet utilisateur, à savoir le code d'authentification AUTH3 que lui a fourni ici le réseau 3 lors de sa souscription à un abonnement pour pouvoir communiquer sur le réseau 3 en utilisant l'identité téléphonique IDPub3. On note que l'utilisateur peut fournir ce code de différentes manières, par exemple vocalement ou en saisissant le code d'authentification sur le clavier de son terminal, auquel cas, le code d'authentification ainsi saisi est ensuite transmis par le terminal dans le canal de voix sur IP en utilisant des fréquences vocales ou DTMF (Dual Tone Multi Frequency). Le module 6E suivant l'implémentation choisie, peut comprendre donc le module de reconnaissance vocale du serveur vocal interactif 15, et/ou un module de réception de signaux DTMF compris également ici dans le serveur vocal interactif 15, et apte à extraire du signal DTMF reçu du terminal le code d'authentification véhiculé par ce signal ;
   ∘ un module 6F de mise à jour, activé si le code d'authentification fourni par l'utilisateur U via le serveur vocal 15 est associé au niveau du réseau 3 de voix sur IP (dans sa base de données 4 ici) à une identité téléphonique allouée par le réseau 3 de voix sur IP, et configuré pour mettre à jour la base de données 13 en couplant dans celle-ci l'identifiant matériel du terminal 2 à cette identité téléphonique. On note que dans la base de données 13, une même identité téléphonique peut être couplée à plusieurs identifiants matériels de différents terminaux.

Les fonctions des modules 6A-6F sont décrites plus en détail maintenant en référence aux étapes du procédé de mise à jour selon l'invention.

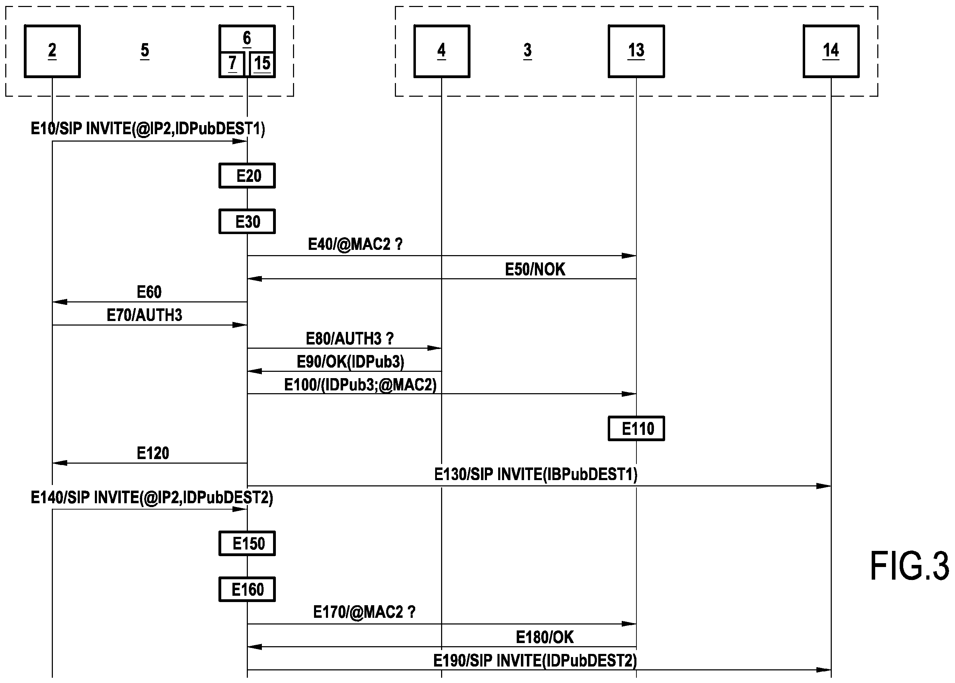

La **figure 3** représente les principales étapes du procédé de mise à jour selon l'invention, tel qu'il est mis à jour dans un mode particulier de réalisation par la passerelle 6.

On suppose ici que l'utilisateur U souhaite utiliser l'un de ses terminaux 2 pour passer un appel en voix sur IP sur le réseau 3 de téléphonie fixe et que ce terminal 2 (ni ici aucun autre terminal de l'utilisateur U) n'a jamais été jusqu'alors couplé avec l'identité téléphonique IDPub3 reçue par l'utilisateur U lors de la souscription de son abonnement auprès de l'opérateur du réseau 3. En d'autres mots, dans l'exemple envisagé ici, la base de données 13 maintenue par le réseau 3 ne contient aucun identifiant matériel de terminal couplé avec l'identité téléphonique IDPub3.

Cette hypothèse n'est toutefois pas limitative : on pourrait par exemple envisager selon une hypothèse alternative que l'identité téléphonique IDPub3 est couplée dans la base avec un ou plusieurs identifiants matériels de terminaux distincts du terminal 2.

Pour émettre un appel sur le réseau 3, le terminal 2 émet un message SIP INVITE à destination du réseau 3 contenant, dans son entête (dans le champ TO), l'identité téléphonique du destinataire DEST1 que l'utilisateur U cherche à joindre, notée IDPubDEST1 ici (étape E10). Le message SIP INVITE contient également dans son entête, dans le champ FROM son adresse IP @IP2 sur le réseau local 5.

Le message SIP INVITE émis par le terminal 2 transite par la passerelle 6 et est reçu par son module 6A de réception (étape E20).

Le module 6B de détermination de la passerelle 6 extrait l'adresse @IP2 contenue dans le message SIP INVITE et interroge la table ARP 7 maintenue par la passerelle 6 avec cette adresse @IP2 pour déterminer un identifiant matériel du terminal 2. Il obtient en réponse l'adresse MAC @MAC2 du terminal 2 (étape E30).

En variante, si la passerelle 6 ne maintient pas à jour une telle table ARP, le module 6B de détermination peut interroger le terminal 2 suite à la réception du message SIP en lui envoyant une requête conforme au protocole ARP comprenant en paramètre l'adresse IP @IP2 du terminal 2, requête à laquelle le terminal 2 répond en transmettant son adresse MAC @MAC2.

Puis la passerelle 6, via ici son module 6B de détermination, interroge le réseau 3 et plus particulièrement sa base de données 13 pour déterminer si l'identifiant matériel @MAC2 du terminal 2 est couplé dans cette base à une identité téléphonique allouée par le réseau 3 à un utilisateur (étape E40).

Dans l'exemple envisagé ici, l'identifiant matériel @MAC2 n'est couplé à aucune identité téléphonique sur le réseau 3 dans la base de données 13.

Par conséquent, le module 6B de détermination reçoit une réponse négative de la base de données 13 du réseau 3 (étape E50). Cette réponse négative déclenche l'activation des modules 6D à 6F de la passerelle 6.

Plus précisément, la passerelle 6, via son module 6D, déclenche alors l'établissement d'un canal de voix sur IP entre le terminal 2 et le serveur vocal interactif 15 via le réseau local 5, de façon connue en soi (étape E60). Plus spécifiquement à cet effet, dans le mode de réalisation décrit ici et le contexte SIP envisagé, le module 6D envoie au serveur vocal interactif 15 un message SIP INVITE auquel celui-ci répond par un message 200 OK contenant ses informations média pour l'établissement d'un flux média (flux RTP pour Real Time Protocol). Le module 6D répond au message SIP INVITE émis par le terminal 2 en lui envoyant un message d'acceptation 200 OK contenant les informations média du serveur vocal 15.

Sur réception de ce message de réponse, un canal de voix sur IP est établi entre le terminal 2 et le serveur vocal 15 (on note que la signalisation relative à ce canal de voix sur IP n'est pas échangée de manière directe entre le terminal 2 et le serveur vocal 15 mais passe par la passerelle 6, la signalisation et les flux media étant gérés de façon séparée dans le protocole SIP).

Une fois cet appel établi, le serveur vocal interactif 15 interagit avec l'utilisateur U, et notamment l'invite à fournir le code d'authentification qu'il a reçu du réseau 3 en association avec son identité téléphonique lors de la souscription de son abonnement auprès de l'opérateur du réseau 3.

En réponse à cette invitation, l'utilisateur U fournit via son terminal 2 le code d'authentification AUTH3 que lui a donné l'opérateur du réseau 3 lors de la souscription de son abonnement (étape E70). A cet effet, il peut soit prononcer le code d'authentification AUTH3 via le microphone de son terminal 2, soit de manière plus discrète, fournir ce code d'authentification via le clavier de son terminal 2. Dans cette dernière hypothèse, le code d'authentification est alors transmis sur le canal de voix sur IP via un signal utilisant des fréquences vocales (DTMF) et est reçu par le module de réception du serveur vocal interactif 15.

Le code d'authentification AUTH3 est reconnu par le serveur vocal interactif 15 par l'intermédiaire de son module de reconnaissance vocale ou par l'intermédiaire de son module de réception de signaux DTMF (inclus pour mémoire ici dans le module 6E d'obtention de la passerelle 6) (étape E80). On note que l'invitation de l'utilisateur U à fournir son code d'authentification et l'obtention du code constituent une étape d'obtention du code d'authentification de l'utilisateur U au sens de l'invention.

Puis la passerelle 6, par l'intermédiaire ici de son module 6B de détermination, vérifie auprès du réseau 3 si le code d'authentification AUTH3 fourni par l'utilisateur U correspond à une identité téléphonique précédemment allouée par le réseau 3 à un utilisateur. A cet effet, le module 6B de détermination interroge ici la base de données 4 du réseau 3 en lui transmettant le code d'authentification AUTH3 reçu de l'utilisateur U via le serveur vocal interactif 15 (étape E80).

Dans l'exemple envisagé ici, le code d'authentification AUTH3 est associé dans la base de données 4 à une identité téléphonique, à savoir à l'identité téléphonique IDPub3 allouée par le réseau 3 à l'utilisateur U. La base de données 4 renvoie une réponse positive à la passerelle 6 incluant l'identité téléphonique IDPub3 (étape E90).

Sur réception de la réponse positive de la base de données 4 et de l'identité téléphonique IDPub3, la passerelle 6 via son module 6F de mise à jour met à jour la base de données 13 du réseau 3 (étape E100). A cet effet, le module 6F de mise à jour envoie un message de mise à jour à la base de données 13 comprenant l'identité téléphonique publique IDPub3 de l'utilisateur U couplée à l'adresse MAC @MAC2 de son terminal 2.

Sur réception de ce message, la base de données 13 est mise à jour avec l'adresse @MAC2 du terminal 2 (étape E110) : à l'issue de cette mise à jour, l'adresse @MAC2 est couplée dans la base à l'identité téléphonique publique @IDPub3.

Dans le mode de réalisation décrit ici, la passerelle 6, suite à cette mise à jour, met fin à l'appel établi entre le terminal 2 et le serveur vocal interactif 15 (étape E120), et transfère le message d'initiation d'appel SIP INVITE reçu lors de l'étape E10 au réseau 3 (et plus particulièrement à sa plateforme VoIP 14) pour établissement de l'appel sur le réseau de voix sur IP 3 avec le destinataire correspondant à l'identité publique IDPubDEST1 (étape E130).

Dans un autre mode de réalisation, la passerelle 6, avant de mettre fin à l'appel établi entre le terminal 2 et le serveur vocal interactif 15, invite l'utilisateur U, via le serveur vocal interactif 15, à réémettre son appel à destination du réseau 3.

On note que dans le mode de réalisation décrit ici, l'identité publique IDPub3 que la passerelle 6 couple à l'identifiant matériel du terminal 2 est transmise par le réseau de voix sur IP. Dans un autre mode de réalisation, cette identité publique peut être fournie par l'utilisateur lors de son interaction avec le serveur vocal interactif, par exemple lorsque l'utilisateur fournit son code d'authentification AUTH3. L'identité publique peut alors être transmise par la passerelle 6 à la base de données 4 pour réaliser une vérification supplémentaire, à savoir que dans la base cette identité publique est bien associée au code d'authentification fourni par l'utilisateur.

On suppose maintenant que l'utilisateur U souhaite émettre un nouvel appel via son terminal 2 vers par exemple un autre destinataire dont l'identité téléphonique est IDPubDEST2.

Le terminal 2 envoie un message SIP INVITE à destination du réseau 3 contenant dans le champ TO de son entête l'identité téléphonique IDPubDEST2 et dans son champ FROM, l'adresse IP du terminal 2 @IP2 (étape E140).

Le message SIP INVITE émis par le terminal 2 transite via la passerelle 6 et est reçu par son module 6A de réception (étape E150).

Comme décrit précédemment à l'étape E30, le module 6B de détermination de la passerelle 6 extrait l'adresse @IP2 contenue dans le message SIP INVITE et interroge la table ARP 7 maintenue par la passerelle 6 avec cette adresse @IP2 pour déterminer un identifiant matériel du terminal 2. Il obtient en réponse l'adresse MAC @MAC2 du terminal 2 (étape E160).

En variante, si la passerelle 6 ne maintient pas à jour une telle table ARP, le module 6B de détermination peut interroger le terminal 2 en lui envoyant une requête conforme au protocole ARP comme décrit précédemment.

Puis la passerelle 6, via ici son module 6B de détermination, interroge le réseau 3 et plus particulièrement sa base de données 13 pour déterminer si l'identifiant matériel @MAC2 du terminal 2 est couplé dans cette base à une identité téléphonique allouée par le réseau 3 à un utilisateur (étape E170).

Suite à l'étape de mise à jour E100, l'identifiant matériel @MAC2 est couplé dans la base de données 13 à l'identité téléphonique IDPub3. La base de données 13 répond donc positivement au module 6B de détermination (étape E180). Cette réponse positive déclenche l'activation du module de transfert 6C de la passerelle 6, qui transfère le message SIP INVITE reçu à l'étape E150 au réseau 3 (et plus particulièrement à la plateforme VoIP 14) pour établissement de l'appel (étape E190). La façon dont l'appel est établi est connue en soi, et non décrit ici.

Dans le mode de réalisation décrit ici, il est donné la possibilité à l'utilisateur du terminal 2 de découpler ce terminal 2 de l'identité publique IDPub3, par exemple car il n'utilise plus ce terminal. A cet effet, un numéro technique dédié peut être fourni à l'utilisateur, par exemple 1234 que celui-ci peut composer via son terminal 2 en envoyant un message SIP INVITE destiné au numéro 1234. Ce message SIP INVITE transite via la passerelle 6 comme mentionné précédemment qui, sur détection du numéro technique dédié 1234 auquel est destiné le message SIP INVITE, interprète ce message SIP INVITE comme une commande de suppression du couplage du terminal 2 stocké dans la base de données 13. Elle supprime donc en réponse à ce message de la base de données 13, le couplage de l'identifiant matériel @MAC2 avec l'identité publique IDPub3. On note que si d'autres identifiants matériels sont associés dans la base de données 13 à l'identité publique IDPub3, cette suppression n'a aucune incidence sur ces identifiants.

Dans l'exemple envisagé ici, on s'est intéressé au couplage ou à l'appairage d'un terminal 2 d'un utilisateur, lorsque le terminal est relié directement à la passerelle. Ceci peut être le cas par exemple dans un environnement domestique ou résidentiel. L'invention peut toutefois s'appliquer dans d'autres contextes : typiquement, l'utilisateur peut être une entité morale, comme une entreprise, et le terminal couplé à l'identité publique peut être une plateforme de type IPBX chargée de relier une pluralité d'utilisateurs de l'entreprise (ex. employés) à un réseau de voix sur IP via une passerelle d'accès 6 au réseau de voix sur IP. Dans ce cas, c'est l'identifiant matériel de la plateforme IPBX qui est couplé dans le réseau de voix sur IP avec l'identité publique (i.e. le terminal au sens de l'invention est une plateforme IPBX).

## Revendications

1. Procédé de mise à jour d'une base de données (13) d'un réseau de voix sur IP (3) par une passerelle (6) d'un réseau local (5) permettant un accès au réseau de voix sur IP, le procédé comprenant :
- une étape (E20) de réception d'un message d'initiation d'un appel de voix sur IP sur le réseau de voix sur IP en provenance d'un terminal (2) connecté au réseau local ;
- une étape (E30) de détermination d'un identifiant matériel (@MAC2) du terminal à partir d'une adresse IP (@IP2) utilisée par le terminal sur le réseau local et contenue dans le message d'initiation d'appel, ledit identifiant matériel identifiant de manière unique le terminal ;
- si l'identifiant matériel (@MAC2) est couplé dans la base de données (13) du réseau de voix sur IP à une identité téléphonique (IDPub3) allouée par le réseau de voix sur IP (E180), une étape (E190) de transfert du message d'initiation d'appel vers le réseau de voix sur IP pour établissement de l'appel sur le réseau de voix sur IP avec un destinataire du message d'initiation d'appel ;
- sinon (E50) :
∘ une étape (E60) d'établissement d'un canal de voix sur IP entre le terminal et un serveur vocal (15) hébergé par la passerelle d'accès ;
∘ une étape (E70) d'obtention par le serveur vocal via le canal établi, d'un code d'authentification (AUTH3) d'un utilisateur du terminal ;
∘ s'il est vérifié (E80, E90) que le code d'authentification de l'utilisateur, obtenu est associé au niveau du réseau de voix sur IP à une identité téléphonique allouée par le réseau de voix sur IP (E90), une étape (E100) de mise à jour de la base de données (13) en couplant dans la base de données l'identifiant matériel (@MAC2) du terminal à cette identité téléphonique (IDPub3).

2. Procédé de mise à jour selon la revendication 1 dans lequel l'identifiant matériel (@MAC2) du terminal est déterminé en émettant sur le réseau local une requête selon le protocole ARP (Address Resolution Protocol) utilisant comme paramètre l'adresse IP du terminal.

3. Procédé de mise à jour selon la revendication 1 ou 2 comprenant avant l'étape de mise à jour de la base de données, si le code d'authentification fourni est associé au niveau du réseau de voix sur IP à une identité téléphonique allouée par le réseau de voix sur IP, une étape de réception (E90) de cette identité téléphonique en provenance du réseau de voix sur IP.

4. Procédé de mise à jour selon la revendication 1 ou 2 dans lequel l'identité téléphonique allouée par le réseau de voix sur IP et utilisée lors de l'étape de mise à jour est fournie au serveur vocal par l'utilisateur lors de l'étape d'obtention du code d'authentification.

5. Procédé de mise à jour selon l'une quelconque des revendications 1 à 4 comprenant, suite à l'étape de mise à jour, une étape de transfert (E130) du message d'initiation vers le réseau de voix sur IP pour établissement de l'appel sur le réseau de voix sur IP avec un destinataire du message d'initiation d'appel.

6. Procédé de mise à jour selon l'une quelconque des revendications 1 à 4 comprenant, suite à l'étape de mise à jour, une étape d'invitation de l'utilisateur par le serveur vocal à réémettre son message d'initiation d'appel sur le réseau de voix sur IP.

7. Procédé de mise à jour selon l'une quelconque des revendications 1 à 6 dans lequel le message d'initiation d'appel est un message conforme au protocole SIP (Session Initiation Protocol).

8. Procédé de mise à jour selon l'une quelconque des revendications 1 à 7 dans lequel l'identifiant matériel du terminal est une adresse MAC (Medium Access Control) du terminal.

9. Procédé de mise à jour selon l'une quelconque des revendications 1 à 8 comprenant :
- une étape de réception d'une commande de découplage en provenance du terminal (2) ; et
- une étape de suppression de l'identifiant matériel (@MAC2) du terminal dans la base de données.

10. Programme d'ordinateur (PROG) comportant des instructions pour l'exécution des étapes du procédé de mise à jour selon l'une quelconque des revendications 1 à 9 lorsque ledit programme est exécuté par un ordinateur.

11. Support d'enregistrement (9) lisible par un ordinateur sur lequel est enregistré un programme d'ordinateur comprenant des instructions pour l'exécution des étapes du procédé de mise à jour selon l'une quelconque des revendications 1 à 9.

12. Passerelle d'accès (6) à un réseau de voix sur IP (3), connectée à un réseau local (5) et comprenant :
- un module (6A) de réception, apte à recevoir un message d'initiation d'un appel de voix sur IP sur le réseau de voix sur IP en provenance d'un terminal connecté au réseau local ;
- un module (6B) de détermination, configuré pour déterminer un identifiant matériel du terminal à partir d'une adresse IP utilisée par le terminal sur le réseau local et contenue dans le message d'initiation d'appel, cet identifiant matériel identifiant de manière unique le terminal ;
- un module (6C) de transfert, activé si l'identifiant matériel est couplé dans une base de données (13) du réseau de voix sur IP à une identité téléphonique allouée par le réseau de voix sur IP, et configuré pour transférer le message d'initiation vers le réseau de voix sur IP pour établissement de l'appel sur le réseau de voix sur IP avec un destinataire du message d'initiation d'appel ;
- des modules activés sinon comprenant :
∘ un module (6D) d'établissement, configuré pour établir un canal de voix sur IP entre le terminal et un serveur vocal (15) hébergé par la passerelle d'accès ;
∘ un module (6E) d'obtention, configuré pour obtenir via le serveur vocal et le canal établi un code d'authentification (AUTH3) d'un utilisateur du terminal ;
∘ un module (6F) de mise à jour, activé le code d'authentification de l'utilisateur obtenu est vérifié comme étant associé au niveau du réseau de voix sur IP à une identité téléphonique (IDPub3) allouée par le réseau de voix sur IP, et configuré pour mettre à jour la base de données en couplant dans la base de données l'identifiant matériel du terminal à cette identité téléphonique.

13. Passerelle d'accès (6) selon la revendication 12 dans lequel le serveur vocal (15) comprend un module de synthèse vocale, et/ou un module de reconnaissance vocale et/ou un agent conversationnel.

14. Système de communication (1) comprenant :
- au moins un terminal (2) d'un utilisateur connecté à un réseau local ;
- une base de données (13) d'un réseau de voix sur IP ; et
une passerelle d'accès (6) au réseau de voix sur IP conforme la revendication 12 ou 13 et connectée au réseau local, cette passerelle d'accès étant apte à mettre à jour la base de données du réseau de voix sur IP avec une identité téléphonique allouée par le réseau de voix sur IP à l'utilisateur du terminal couplée à au moins un identifiant matériel du terminal de l'utilisateur.

## Patentansprüche

1. Verfahren zur Aktualisierung einer Datenbank (13) eines Voice-over-IP-Netzwerks (3) durch ein Gateway (6) eines lokalen Netzwerks (5), das einen Zugang zu dem Voice-over-IP-Netzwerk ermöglicht, das Verfahren umfassend:
- einen Schritt (E20) des Empfangens einer Initiierungsnachricht für einen Voice-over-IP-Anruf über das Voice-over-IP-Netzwerk von einem mit dem lokalen Netzwerk verbundenen Endgerät (2);
- einen Schritt (E30) des Ermittelns einer Hardware-Kennung (@MAC2) des Endgeräts ausgehend von einer IP-Adresse (@IP2), die von dem Endgerät in dem lokalen Netzwerk verwendet wird und in der Anrufinitiierungsnachricht enthalten ist, wobei die Hardware-Kennung das Endgerät eindeutig identifiziert;
- wenn die Hardware-Kennung (@MAC2) in der Datenbank (13) des Voice-over-IP-Netzwerks mit einer Telefonidentität (IDPub3) gekoppelt ist, die von dem Voice-over-IP-Netzwerk vergeben wurde (E180), einen Schritt (E190) des Transferierens der Anrufinitiierungsnachricht zu dem Voice-over-IP-Netzwerk zum Aufbauen des Anrufs über das Voice-over-IP-Netzwerk mit einem Empfänger der Anrufinitiierungsnachricht;
- ansonsten (E50):
o einen Schritt (E60) des Aufbauens eines Voice-over-IP-Kanals zwischen dem Endgerät und einem Sprachserver (15), der von dem Zugangsgateway gehostet wird;
o einen Schritt (E70) des Erhaltens eines Authentifizierungscodes (AUTH3) eines Benutzers des Endgeräts durch den Sprachserver über den aufgebauten Kanal;
o wenn überprüft ist (E80, E90), dass der erhaltene Authentifizierungscode des Benutzers auf Ebene des Voice-over-IP-Netzwerks einer Telefonidentität zugeordnet ist, die von dem Voice-over-IP-Netzwerk vergeben wurde (E90), einen Schritt (E100) des Aktualisierens der Datenbank (13), indem in der Datenbank die Hardware-Kennung (@MAC2) des Endgeräts mit dieser Telefonidentität (IDPub3) gekoppelt wird.

2. Verfahren zur Aktualisierung nach Anspruch 1, wobei die Hardware-Kennung (@MAC2) des Endgeräts ermittelt wird, indem über das lokale Netzwerk eine Anfrage nach dem Protokoll ARP (Address Resolution Protocol) gesendet wird, wobei als Parameter die IP-Adresse des Endgeräts verwendet wird.

3. Verfahren zur Aktualisierung nach Anspruch 1 oder 2, umfassend vor dem Schritt des Aktualisierens der Datenbank, wenn der bereitgestellte Authentifizierungscode auf Ebene des Voice-over-IP-Netzwerks einer von dem Voice-over-IP-Netzwerk vergebenen Telefonidentität zugeordnet ist, einen Schritt des Empfangens (E90) dieser Telefonidentität von dem Voice-over-IP-Netzwerk.

4. Verfahren zur Aktualisierung nach Anspruch 1 oder 2, wobei die von dem Voice-over-IP-Netzwerk vergebene und bei dem Schritt des Aktualisierens verwendete Telefonidentität dem Sprachserver von dem Benutzer bei dem Schritt des Erhaltens des Authentifizierungscodes bereitgestellt wird.

5. Verfahren zur Aktualisierung nach einem der Ansprüche 1 bis 4, umfassend nach dem Schritt des Aktualisierens einen Schritt des Transferierens (E130) der Initiierungsnachricht zu dem Voice-over-IP-Netzwerk zum Aufbauen des Anrufs über das Voice-over-IP-Netzwerk mit einem Empfänger der Anrufinitiierungsnachricht.

6. Verfahren zur Aktualisierung nach einem der Ansprüche 1 bis 4, umfassend nach dem Schritt des Aktualisierens einen Schritt des Aufforderns des Benutzers durch den Sprachserver, seine Anrufinitiierungsnachricht über das Voice-over-IP-Netzwerk erneut zu senden.

7. Verfahren zur Aktualisierung nach einem der Ansprüche 1 bis 6, wobei die Anrufinitiierungsnachricht eine Nachricht gemäß dem Protokoll SIP (Session Initiation Protocol) ist.

8. Verfahren zur Aktualisierung nach einem der Ansprüche 1 bis 7, wobei die Hardware-Kennung des Endgeräts eine MAC-Adresse (Medium Access Control) des Endgeräts ist.

9. Verfahren zur Aktualisierung nach einem der Ansprüche 1 bis 8, umfassend:
- einen Schritt des Empfangens eines Entkopplungsbefehls von dem Endgerät (2); und
- einen Schritt des Löschens der Hardware-Kennung (@MAC2) des Endgeräts aus der Datenbank.

10. Computerprogramm (PROG), das Anweisungen umfasst, die bei der Ausführung des Programms durch einen Computer die Schritte des Verfahrens zur Aktualisierung nach einem der Ansprüche 1 bis 9 ausführen.

11. Computerlesbares Speichermedium (9), auf dem ein Computerprogramm gespeichert ist, das Anweisungen zur Ausführung der Schritte des Verfahrens zur Aktualisierung nach einem der Ansprüche 1 bis 9 umfasst.

12. Zugangsgateway (6) zu einem Voice-over-IP-Netzwerk (3), das mit einem lokalen Netzwerk (5) verbunden ist und umfasst:
- ein Empfangsmodul (6A), das geeignet ist, eine Initiierungsnachricht für einen Voice-over-IP-Anruf über das Voice-over-IP-Netzwerk von einem mit dem lokalen Netzwerk verbundenen Endgerät zu empfangen;
- ein Ermittlungsmodul (6B), das dazu ausgestaltet ist, eine Hardware-Kennung des Endgeräts ausgehend von einer IP-Adresse, die von dem Endgerät in dem lokalen Netzwerk verwendet wird und in der Anrufinitiierungsnachricht enthalten ist, zu ermitteln, wobei diese Hardware-Kennung das Endgerät eindeutig identifiziert;
- ein Transfermodul (6C), das aktiviert wird, wenn die Hardware-Kennung in einer Datenbank (13) des Voice-over-IP-Netzwerk mit einer von dem Voice-over-IP-Netzwerk vergebenen Telefonidentität gekoppelt ist, und dazu ausgestaltet ist, die Initiierungsnachricht zu dem Voice-over-IP-Netzwerk zum Aufbauen des Anrufs über das Voice-over-IP-Netzwerk mit einem Empfänger der Anrufinitiierungsnachricht zu transferieren;
- Module, die ansonsten aktiviert werden, umfassend:
o ein Aufbaumodul (6D), das dazu ausgestaltet ist, einen Voice-over-IP-Kanal zwischen dem Endgerät und einem Sprachserver (15), der von dem Zugangsgateway gehostet wird, aufzubauen;
o ein Erhaltungsmodul (6E), das dazu ausgestaltet ist, über den Sprachserver und den aufgebauten Kanal einen Authentifizierungscode (AUTH3) eines Benutzers des Endgeräts zu erhalten;
o ein Aktualisierungsmodul (6F), das aktiviert wird, wenn überprüft ist, dass der erhaltene Authentifizierungscode des Benutzers auf Ebene des Voice-over-IP-Netzwerks einer von dem Voice-over-IP-Netzwerk vergebenen Telefonidentität (IDPub3) zugeordnet ist, und dazu ausgestaltet ist, die Datenbank zu aktualisieren, indem in der Datenbank die Hardware-Kennung des Endgeräts mit dieser Telefonidentität gekoppelt wird.

13. Zugangsgateway (6) nach Anspruch 12, wobei der Sprachserver (15) ein Sprachsynthesemodul und/oder ein Spracherkennungsmodul und/oder ein Konversationssystem umfasst.

14. Kommunikationssystem (1), umfassend:
- mindestens ein Endgerät (2) eines Benutzers, das mit einem lokalen Netzwerk verbunden ist;
- eine Datenbank (13) eines Voice-over-IP-Netzwerks; und
ein Zugangsgateway (6) zu dem Voice-over-IP-Netzwerk, das Anspruch 12 oder 13 entspricht und mit dem lokalen Netzwerk verbunden ist, wobei dieses Zugangsgateway geeignet ist, die Datenbank des Voice-over-IP-Netzwerks mit einer dem Benutzer des Endgeräts von dem Voice-over-IP-Netzwerk vergebenen Telefonidentität zu aktualisieren, die mit mindestens einer Hardware-Kennung des Endgeräts des Benutzers gekoppelt ist.

## Claims

1. Method for updating a database (13) of a VoIP network (3) by means of a gateway (6) of a local area network (5) allowing access to the VoIP network, the method comprising:
- a step (E20) of receiving a call initiation message initiating a VoIP call over the VoIP network from a terminal (2) connected to the local area network;
- a step (E30) of determining a hardware identifier (@MAC2) of the terminal from an IP address (@IP2) used by the terminal on the local area network and contained in the call initiation message, said hardware identifier uniquely identifying the terminal;
- if the hardware identifier (@MAC2) is coupled in the database (13) of the VoIP network with a telephone identity (IDPub3) allocated by the VoIP network (E180), a step (E190) of transferring the call initiation message to the VoIP network with a view to setting up the call over the VoIP network with a recipient of the call initiation message;
- otherwise (E50):
∘ a step (E60) of setting up a VoIP channel between the terminal and a voice server (15) hosted by the access gateway;
∘ a step (E70) of obtaining, by means of the voice server, via the channel set up, an authentication code (AUTH3) of a user of the terminal;
∘ if it is verified (E80, E90) that the obtained authentication code of the user is associated, in the VoIP network, with a telephone identity allocated by the VoIP network (E90), a step (E100) of updating the database (13) by coupling, in the database, the hardware identifier (@MAC2) of the terminal with the telephone identity (IDPub3).

2. Updating method according to Claim 1, wherein the hardware identifier (@MAC2) of the terminal is determined by transmitting, over the local area network, a request according to the ARP (Address Resolution Protocol) protocol using as parameter the IP address of the terminal.

3. Updating method according to Claim 1 or 2 comprising, before the step of updating the database, if the provided authentication code is associated in the VoIP network with a telephone identity allocated by the VoIP network, a step (E90) of receiving the telephone identity from the VoIP network.

4. Updating method according to Claim 1 or 2, wherein the telephone identity allocated by the VoIP network and used in the updating step is provided to the voice server by the user in the step of obtaining the authentication code.

5. Updating method according to any of Claims 1 to 4 comprising, following the updating step, a step (E130) of transferring the initiation message to the VoIP network with a view to setting up the call over the VoIP network with a recipient of the call initiation message.

6. Updating method according to any of Claims 1 to 4 comprising, following the updating step, a step of inviting the user, by means of the voice server, to retransmit her or his call initiation message over the VoIP network.

7. Updating method according to any of Claims 1 to 6, wherein the call initiation message is a message according to the SIP protocol, SIP being the acronym of Session Initiation Protocol.

8. Updating method according to any of Claims 1 to 7, wherein the hardware identifier of the terminal is a MAC (Medium Access Control) address of the terminal.

9. Updating method according to any of Claims 1 to 8, comprising:
- a step of receiving a decoupling command from the terminal (2); and
- a step of deleting the hardware identifier (@MAC2) of the terminal from the database.

10. Computer program (PROG) comprising instructions for executing the steps of the updating method according to any of Claims 1 to 9 when said program is executed by a computer.

11. Computer-readable storage medium (9) on which is stored a computer program comprising instructions for executing the steps of the updating method according to any of Claims 1 to 9.

12. Access gateway (6) for accessing a VoIP network (3), said gateway being connected to a local area network (5) and comprising:
- a receiving module (6A), capable of receiving a call initiation message initiating a VoIP call over the VoIP network from a terminal connected to the local area network;
- a determining module (6B), configured to determine a hardware identifier of the terminal from an IP address used by the terminal on the local area network and contained in the call initiation message, this hardware identifier uniquely identifying the terminal;
- a transferring module (6C), which is activated if the hardware identifier is coupled in a database (13) of the VoIP network with a telephone identity allocated by the VoIP network, and configured to transfer the initiation message to the VoIP network with a view to setting up the call over the VoIP network with a recipient of the call initiation message;
- activated modules otherwise comprising:
∘ a setting-up module (6D), configured to set up a VoIP channel between the terminal and a voice server (15) hosted by the access gateway;
∘ an obtaining module (6E), configured to obtain, via the voice server and the channel set up, an authentication code (AUTH3) of a user of the terminal;
∘ an updating module (6F), which is activated if the obtained authentication code of the user is verified as being associated, in the VoIP network, with a telephone identity (IDPub3) allocated by the VoIP network, and configured to update the database by coupling, in the database, the hardware identifier of the terminal with this telephone identity.

13. Access gateway (6) according to Claim 12, wherein the voice server (15) comprises a speech synthesis module, and/or a speech recognition module and/or a chatbot.

14. Communication system (1), comprising:
- at least one terminal (2) of a user connected to a local area network;
- a database (13) of a VoIP network; and
a VoIP-network access gateway (6) according to Claim 12 or 13 and connected to the local area network, this access gateway being capable of updating the database of the VoIP network with a telephone identity that is allocated by the VoIP network to the user of the terminal and coupled with at least one hardware identifier of the terminal of the user.
